# FASCICULE DE BREVET EUROPEEN

(11) **EP 0 454 573 B1**
(45) Date de publication et mention de la délivrance du brevet: **21.07.1993**
(21) Numéro de dépôt: 91401082.2
(22) Date de dépôt: 24.04.1991
(51) Int. Cl.: B23K 11/11

(54) **Dispositif de pointage automatisé de plaquettes sur aubes de turbomachine et procédé correspondant**
Automatische Einrichtung zum Punktschweissen von Scheiben auf Turbomaschinenschaufeln und Verfahren dafür
Automatic device for spot welding wafers on turbine blades and method therefor

(30) Priorité: 25.04.1990 FR 9005248
(43) Date de publication de la demande: 30.10.1991
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Caruana, Charles Michel, F-92700 Colombes (FR); Laboubee, Patrick, F-95130 Franconville (FR); Roussel, Jean-Jacques Michel, F-95100 Argenteuil (FR)
(74) Mandataire: Moinat, François

(56) Documents cités:
- EP-A- 0 075 497
- EP-A- 0 140 736
- DE-U- 8 624 502

## Description

La présente invention concerne un dispositif permettant la réalisation d'une liaison par points de soudure entre des plaquettes d'usure et le talon ou la nageoire d'une aube de turbomachine, selon le préambule de la revendication 1. Elle concerne également le procédé automatisé correspondant, utilisant pour sa mise en oeuvre ledit dispositif.

Comme il est généralement connu dans les techniques de construction des turbomachines ou moteurs aéronautiques, les aubes peuvent comporter un élément, talon ou talon intermédiaire, encore appelé nageoire, destiné notamment à limiter les débattements pouvant provenir des vibrations de l'aube. Il est alors connu, pour éviter une usure prématurée des faces en regard des talons ou des nageoires de deux aubes adjacentes, de réaliser selon différents procédés connus le dépôt de divers revêtements adaptés à leurs conditions particulières d'utilisation pour chaque application et présentant notamment de bonnes caractéristiques de tenue au frottement. EP-A-0 140 736 cite en outre l'utilisation dans ce but de plaquettes fixées par soudage sur les bords de secteurs voisins d'aubes de stator.

La mise au point de la fabrication de ce type d'aubes a conduit notamment à prévoir l'assemblage de ces éléments rapportés ou plaquettes sur les faces actives de talon d'aube par la mise en oeuvre d'un procédé d'un genre connu en soi, du type brasage-diffusion, réalisé au cours d'un cycle thermique dans un four de traitement sous vide. EP A-0 075 497 décrit par exemple les caractéristiques techniques et les modalités de cette mise en oeuvre, notamment dans le cas où l'élément rapporté est constitué en un matériau autobrasable, ne nécessitant pas l'adjonction d'un matériau d'apport supplémentaire à l'interface des éléments à assembler.

Dans le processus de fabrication d'une aube comportant notamment, comme précédemment indiqué, l'adjonction d'éléments rapportés sur les faces actives du talon ou de la nageoire de l'aube, l'invention vise à résoudre les problèmes posés par la préparation de l'assemblage de ces éléments et notamment à obtenir grâce à un procédé automatisé et à l'utilisation de moyens correspondants adaptés une bonne reproductibilité pour une qualité satisfaisante des pièces, notamment grâce à un positionnement correct et précis des éléments ainsi qu'un coût réduit de mise en oeuvre.

Un dispositif de pointage automatisé de plaquettes sur le talon ou la nageoire d'une aube de turbomachine par soudage par résistance au moyen d'une électrode de soudage et d'une électrode de masse répondant à ces conditions et conforme à l'invention est caractérisé en ce qu'il comporte un manipulateur d'amenée et de reprise de l'aube, un montage de soudage de l'aube comprenant un élément d'appui rigide coopérant avec deux faces du talon d'aube, un élément d'appui flexible coopérant avec deux faces du pied d'aube et un dispositif de serrage de l'aube, et en ce qu'il comporte en outre un moyen susceptible d'effectuer une rotation de 180 degrés dudit montage portant l'aube, un support d'un chargeur contenant une pluralité desdites plaquettes, un moyen d'extraction une à une des plaquettes hors dudit chargeur, un moyen susceptible d'effectuer une rotation de 180 degrés d'une plaquette sur deux autour d'un axe parallèle à ses génératrices et les moyens de transfert de chaque plaquette en position de soudage sur la face du talon d'aube, ledit dispositif comportant en outre les moyens de commande des cycles automatisés de pointage/soudage de deux plaquettes sur chaque talon d'aube, notamment une plaquette sur chaque face intermédiaire de chaque bord en Z du talon d'aube.

Ledit dispositif est avantageusement utilisé notamment pour la mise en oeuvre d'un procédé automatisé de pointage/soudage de plaquettes sur un talon d'aube conforme à l'invention et caractérisé en ce qu'il comporte les étapes suivantes :
a) identification du type d'aube ;
b) positionnement d'une aube sur le montage de soudage au moyen du manipulateur à pinces, dans une première orientation de pointage ;
c) approvisionnement d'une première plaquette dans une première orientation de pointage à partir d'un chargeur disposé sur le barillet ;
d) positionnement et pointage de ladite première plaquette;
e) rotation de 180 degrés du montage portant l'aube vers une seconde orientation de pointage ;
f) approvisionnement d'une seconde plaquette, comme précédemment à l'étape c ;
g) rotation de la seconde plaquette vers une seconde orientation de pointage ;
h) positionnement et pointage de ladite seconde plaquette;
i) reprise de l'aube équipée d'une plaquette sur chaque face active de talon d'aube, au moyen du manipulateur à pinces.

D'autres caractéristiques et avantages de l'invention seront mieux compris à la lecture de la description qui va suivre d'un mode de réalisation de l'invention, en référence aux dessins annexés sur lesquels :
- la figure 1 représente, selon une vue schématique de dessus au sol, un dispositif conforme à l'invention destiné au pointage de plaquettes sur les talons d'aubes ;
- les figures 2, 3 et 4 montrent schématiquement trois étapes dans l'utilisation du dispositif pour la mise en place d'une aube, le pointage/soudage des plaquettes et la reprise de l'aube équipée ;
- les figures 5 et 6 représentent schématiquement des détails du dispositif représenté sur la figure 1, montrant les éléments du dispositif servant à la mise en place des plaquettes ;
- les figures 7 et 8 représentent schématiquement le détail du pointage sur le talon d'une aube respectivement d'une première et d'une deuxième plaquette.

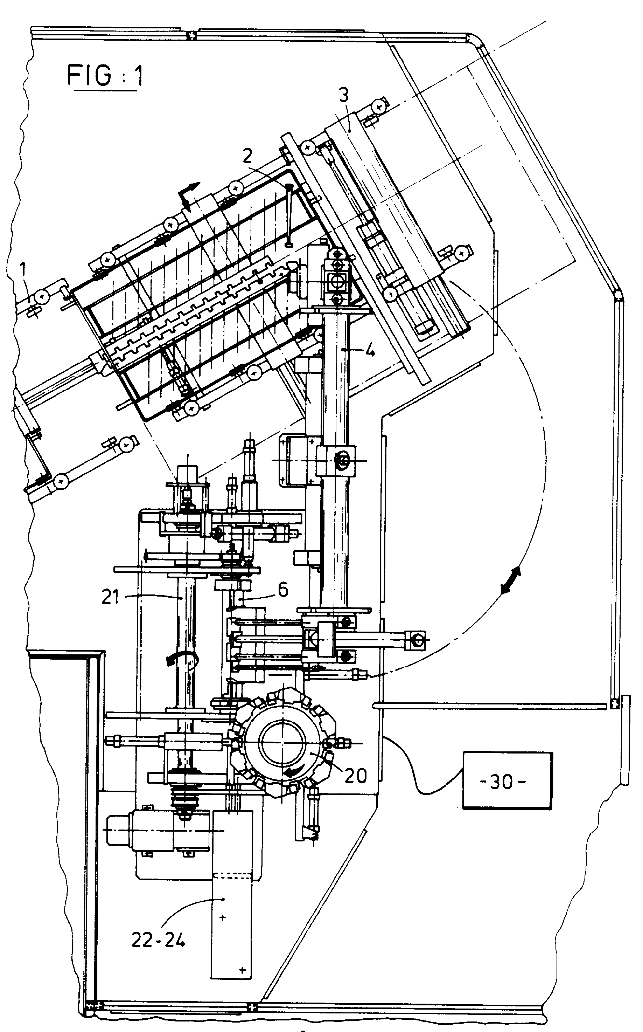

Le dispositif de pointage/soudage automatisé de plaquettes sur le talon d'une aube de turbomachine représenté schématiquement sur la figure 1, selon un mode de réalisation de l'invention, peut être associé à un équipement d'un type connu en soi à manège pour le lavage/nettoyage et séchage des pièces dont seul le poste de sortie 1 a été représenté sur le dessin.

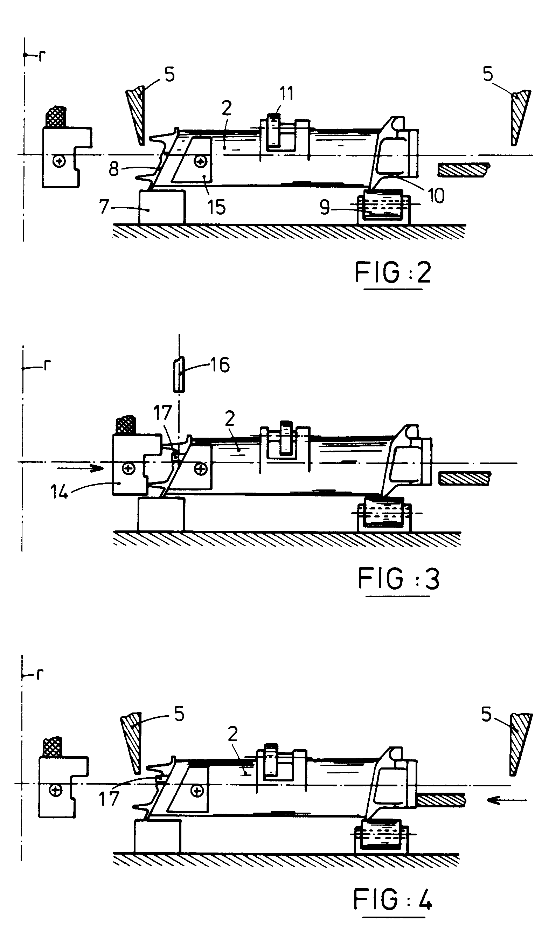

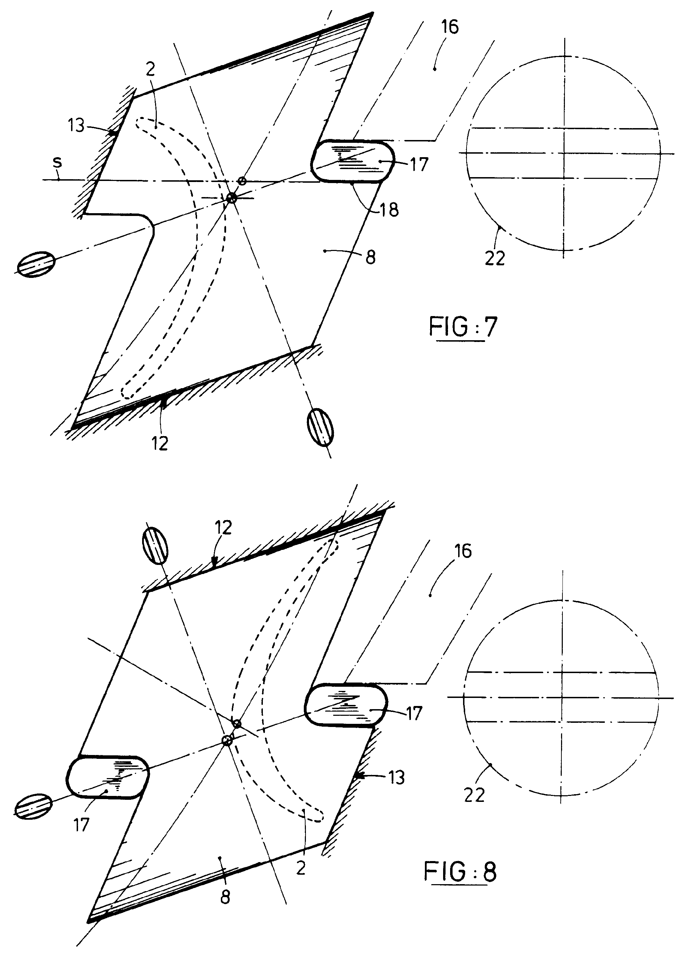

L'amenée des aubes 2 au poste de soudage est assuré à partir d'un poste comportant un dispositif 3 calibreur et d'avance pas à pas au moyen d'un manipulateur 4 équipé de pinces 5 de préhension telles que schématisées sur les figures 2 et 4. Au poste de soudage l'aube 2 est disposée sur un montage de soudage 6 qui comporte, tel que schématisé sur les figures 2, 3 et 4 de détail un élément 7 d'appui rigide pour deux faces du talon 8 d'aube, un élément 9 d'appui articulé flexible pour deux faces du pied 10 d'aube et un dispositif 11 de serrage de l'aube 2 en appui, par exemple au moyen de ressorts. Dans l'exemple représenté sur les dessins d'une application à des aubes dont le talon comporte des bords conjugués à trois faces disposées en Z, comme visible notamment sur les figures 7 et 8 de détail, les faces 12 et 13 du talon d'aube sont en appui sur l'outillage du dispositif de soudage. Au moment du soudage, une électrode 14 de masse est amenée au contact de l'aube 2, la référence de position de l'aube 2 étant fournie par un élément 15 en appui du côté interne du talon 8 d'aube tandis qu'une électrode 16 de soudage vient en appui sur une plaquette 17 à souder sur la face 18 du talon 8 de l'aube 2. Lesdites plaquettes 17 sont approvisionnées dans des chargeurs 19 qui sont disposés sur un barillet rotatif 20 porte-chargeurs, l'extraction des plaquettes étant assurée au moyen d'un vérin 29, tandis qu'un tourniquet 21 assure le retournement d'une plaquette 17 sur deux.

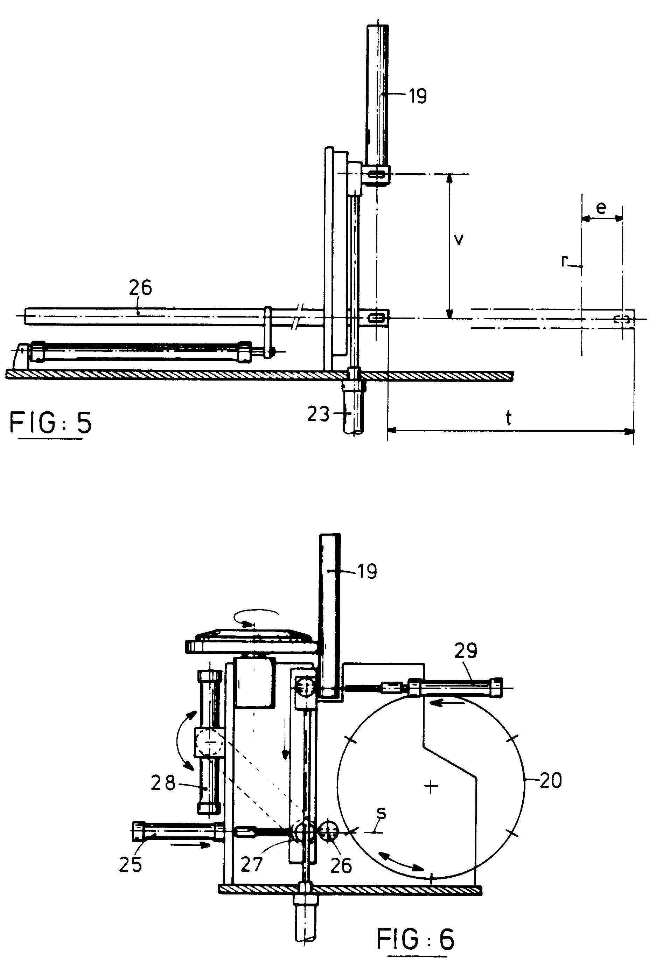

Les figures 5 et 6 montrent schématiquement les éléments du dispositif destinés à la manipulation desdites plaquettes 17, comportant notamment un descenseur 22 à vérin 23, un transfert 24 à vérin 25 et à tige 26, un poste de retournement 27 d'une plaquette sur deux à vérin rotatif 28.

La course du déplacement verticale est représentée en v sur la figure 5 et la course de transfert de la plaquette 17 en t tandis que e représente la position de la plaquette par rapport à la référence r du montage, s étant le plan de référence de soudage.

Le dispositif comporte en outre sans qu'il soit besoin de les décrire en détails les moyens de commande d'un type connu en soi permettant le déroulement des cycles automatisés de pointage/soudage en faisant intervenir successivement les différentes parties du dispositif qui ont été décrites en référence aux figures 1 à 8. Ces moyens sont symbolisés en 30 sur la figure 1.

Le dispositif qui vient d'être décrit en référence aux figures 1 à 8 permet ainsi de solidariser au talon 8 de l'aube 2, un élément rapporté ou plaquette 17 sur chaque face active dudit talon par points de soudage en vue de faciliter la manipulation des aubes lors de la phase finale d'assemblage des plaquettes sur le talon d'aube, notamment par brasage-diffusion effectué en four de traitement sous vide. Le procédé automatisé de pointage/soudage de plaquettes sur un talon d'aube conforme à l'invention et appliquant un processus d'utilisation du dispositif qui vient d'être décrit comporte ainsi les étapes remarquables suivantes :
a) identification du type d'aube ;
b) positionnement d'une aube 2 sur le montage de soudage 6 au moyen du manipulateur 4 à pinces 5, dans une première orientation de pointage et tel que représenté schématiquement sur la figure 2 ;
c) approvisionnement d'une première plaquette 17 dans une première orientation de pointage à partir d'un chargeur 19 disposé sur le barillet 20 ;
d) positionnement et pointage de ladite première plaquette 17, comme représenté schématiquement sur les figures 3 et 7,
e) rotation de 180 degrés du montage portant l'aube 2 vers une seconde orientation de pointage ;
f) approvisionnement d'une seconde plaquette 17, comme précédemment à l'étape c ;
g) rotation de la seconde plaquette 17 vers une seconde orientation de pointages ;
h) positionnement et pointage de ladite seconde plaquette 17, comme représenté schématiquement sur la figure 8 ;
i) reprise de l'aube 2 équipée d'une plaquette 17 sur chaque face active du talon d'aube, au moyen du manipulateur 4 à pinces 5, tel que schématiquement représenté sur la figure 4.

L'automatisation ainsi réalisée permet un positionnement précis de l'aube et des plaquettes à rapporter en absorbant les dispersions géométriques des pièces résultant des opérations précédentes de fabrication, tant d'usinage de l'aube que de fabrication des plaquettes, notamment par un procédé connu en soi de frittage réactif ou d'auto-brasage.

## Revendications

1. Dispositif de pointage automatisé de plaquettes (17) sur les faces de talon (8) de nageoire d'une aube (2) de turbomachine par soudage par résistance au moyen d'une électrode de soudage (16) et d'une électrode de masse (14) caractérisé en ce qu'il comporte un manipulateur (4) d'amenée et de reprise de l'aube (2), un montage (6) de soudage de l'aube (2) comprenant un élément (7) d'appui rigide coopérant avec deux faces (12,13) du talon (8) d'aube, un élément (9) d'appui flexible coopérant avec deux faces du pied (10) d'aube et un dispositif de serrage (11) te l'aube, et en ce qu'il comporte en outre un moyen susceptible d'effectuer une rotation de 180 degrés dudit montage (6) portant l'aube (2), un barillet (20) portant des chargeurs (19) contenant une pluralité desdites plaquettes (17), un moyen d'extraction une à une des plaquettes (17) hors dudit chargeur (19), un moyen (21) susceptible d'effectuer une rotation de 180 degrés d'une plaquette (17) sur deux autour d'un axe parallèle à ses génératrices et les moyens de transfert de chaque plaquette en position de soudage sur la face de talon (8) d'aube, ledit dispositif comportant en outre les moyens de commande (30) des cycles automatisés de pointage/soudage de deux plaquettes (17) sur chaque talon (8) d'aube, notamment une plaquette sur chaque face intermédiaire (18) de chaque bord en Z du talon (8) d'aube.

2. Procédé automatisé de pointage/soudage de plaquettes (17) sur un talon (8) ou nageoire d'aube (2) utilisant un dispositif de pointage conforme à la revendication 1 caractérisé en ce qu'il comporte les étapes suivantes :
a) identification du type d'aube (2) ;
b) positionnement d'une aube (2) sur le montage (6) de soudage au moyen du manipulateur (4) à pinces, dans une première orientation de pointage ;
c) approvisionnement d'une première plaquette (17) dans une première orientation de pointage à partir d'un chargeur (19) disposé sur le barillet (20) ;
d) positionnement et pointage de ladite première plaquette (17);
e) rotation de 180 degrés du montage portant l'aube (2) vers une seconde orientation de pointage ;
f) approvisionnement d'une seconde plaquette (17), comme précédemment à l'étape c ;
g) rotation de la seconde plaquette (17) vers une seconde orientation de pointage ;
h) positionnement et pointage de ladite seconde plaquette (17);
i) reprise de l'aube (2) équipée d'une plaquette (17) sur chaque face active de talon (8) d'aube, au moyen du manipulateur (4) à pinces.

## Claims

1. Device for automatically tack-welding inserts (17) on the stub shroud-end root faces (8) of a turbine machine blade (2) by resistance welding by means of a welding electrode (16) and an earth electrode (14), characterised in that it comprises a manipulator (4) for bringing in and taking up the blade (2), a fixture (6) for welding the blade (2) comprising a rigid support element (7) interacting with two faces (12, 13) of the blade shroud-end root (8), a flexible support element (9) interacting with two faces of the blade hub-end root (10) and a device (11) for clamping the blade, and in that it further comprises a means capable of rotating the said fixture (6) carrying the blade (2) through 180 degrees, a turret (20) carrying loaders (19) containing a plurality of the said inserts (17), a means for extracting the inserts (17) from the said loader (19) one by one, a means (21) capable of rotating every second insert (17) through 180 degrees about an axis parallel to its generatrices and the means for transferring each insert into position for welding onto the face of the blade shroud-end root (8), the said device further comprising means (30) for controlling automated tack-welding/welding cycles of two inserts (17) onto each blade shroud-end root (8), especially one insert on each intermediate face (18) of each Z-shaped edge of the blade shroud-end root (8).

2. Automated method for tack-welding/welding inserts (17) onto a blade (2) shroud-end root (8) or stub using a tack-welding device in accordance with Claim 1, characterised in that it comprises the following steps:
a) identifying the type of blade (2);
b) positioning a blade (2) on the welding fixture (6) by means of the gripper-type manipulator (4), in a first tack-welding orientation;
c) supplying a first insert (17) in a first tack-welding orientation from a loader (19) arranged on the turret (20);
d) positioning and tack-welding the said first insert (17);
e) rotating the fixture carrying the blade (2) through 180 degrees into a second tack-welding orientation;
f) supplying a second insert (17) as previously at step c);
g) rotating the second insert (17) into a second tack-welding orientation;
h) positioning and tack-welding the said second insert (17);
i) taking up the blade (2) equipped with an insert (17) on each active blade shroud-end root face (8), by means of the gripper-type manipulator (4).

## Patentansprüche

1. Automatische Vorrichtung zum Punktschweißen von Scheiben (17) an die Seiten der Hinterkante (8) des Ansatzes einer Turbotriebwerkschaufel (2) durch Widerstandschweißen mit einer Schweißelektrode (16) und einer Masseelektrode (14), dadurch gekennzeichnet,
daß sie einen Zuführ- und Rückstellmanipulator (4) für die Schaufel (2), einen Schweißaufbau (6) für die Schaufel (2), der ein starres Stützteil (7) enthält, das mit zwei Seiten (12, 13) des Schaufelansatzes (8) zusammenwirkt, ein biegsames Stützteil (9), das mit zwei Seiten des Schaufelfußes (10) zusammenwirkt, und eine Klemmvorrichtung (11) für die Schaufel aufweist, und daß sie des weiteren ein Mittel, das geeignet ist, eine Drehung des genannten die Schaufel (2) tragenden Aufbaus (6) um 180° auszuführen, ein Magazin (20), auf dem Befüllvorrichtungen (19) aufliegen, die mehrere der genannten Scheiben (17) enthalten, ein Mittel zum einzelnen Herausholen der Scheiben (17) aus der genannten Befüllvorrichtung (19), ein Mittel (21), das geeignet ist, jede zweite Scheibe (17) um 180° um eine zu ihren Mantellinien parallele Achse zu drehen, sowie die Mittel zum Transportieren jeder Scheibe in die Schweißposition an der Seite des Schaufelansatzes (8) enthält, wobei die genannte Vorrichtung des weiteren die Steuermittel (30) für die automatischen Arbeitszyklen des Punktschweißens/Schweißens von zwei Scheiben (17) an jeden Schaufelansatz (8), insbesondere einer Scheibe an jede Zwischenseite (18) jedes Z-förmigen Randes des Schaufelansatzes (8) enthält.

2. Automatisches Verfahren des Punktschweißens/Schweißens von Scheiben (17) an einen Ansatz (8) oder Hinterkante einer Schaufel (2) unter Anwendung einer Punktschweiß-Vorrichtung gemäß Anspruch 1, dadurch gekennzeichnet, daß es aus den folgenden Schritten besteht:
a) Identifizierung der Art der Schaufel (2);
b) Positionieren einer Schaufel (2) auf dem Schweißaufbau (6) in einer ersten Punktschweißausrichtung, mit Hilfe des Zangenmanipulators (4);
c) Zuführung einer ersten Scheibe (17) aus einer Befüllvorrichtung (19), die auf dem Magazin (20) angeordnet ist, in einer ersten Punktschweißausrichtung;
d) Positionieren und Punktschweißen der genannten ersten Scheibe (17);
e) Drehen des die Schaufel (2) tragenden Aufbaus um 180° in eine zweite Punktschweißausrichtung;
f) Zuführung einer zweiten Scheibe (17) wie zuvor in Arbeitsschritt c);
g) Drehen der zweiten Scheibe (17) in eine zweite Punktschweißausrichtung ;
h) Positionieren und Punktschweißen der genannten zweiten Scheibe (17);
i) Erneutes Ergreifen der auf jeder aktiven Seite des Schaufelansatzes (8) mit einer Scheibe (17) bestückten Schaufel (2) mittels des Zangenmanipulators (4).
